# EUROPÄISCHE PATENTSCHRIFT

(11) **EP 3 586 064 B1**
(45) Veröffentlichungstag und Bekanntmachung des Hinweises auf die Patenterteilung: **30.08.2023**
(21) Anmeldenummer: 18705862.3
(22) Anmeldetag: 09.02.2018
(51) Int. Cl.: F24C 7/08, F24C 15/04

(54) **GARGERÄT MIT EINEM ENTNEHMBAR AUSGEBILDETEN SENSORMODUL**
COOKING DEVICE COMPRISING A REMOVABLE SENSOR MODULE
APPAREIL DE CUISSON DOTÉ D'UN MODULE DE DÉTECTION CONÇU DE MANIÈRE AMOVIBLE

(30) Priorität: 21.02.2017 DE 102017202773
(43) Veröffentlichungstag der Anmeldung: 01.01.2020
(73) Patentinhaber: BSH Hausgeräte GmbH, 81739 München (DE)
(72) Erfinder: ERBE, Sebastian, 75438 Knittlingen-Freudenstein (DE); HIMMEL, Arnulf, 83301 Traunreut (DE); NEUMAYER, Dan, 83233 Bernau (DE)
(86) Internationale Anmeldenummer: PCT/EP2018/053277
(87) Internationale Veröffentlichungsnummer: WO 2018/153692

(56) Entgegenhaltungen:
- EP-A1- 2 515 044
- EP-A1- 2 520 169
- EP-A1- 3 136 002
- KR-A- 20140 039 733
- US-A1- 2015 330 640
- US-A1- 2016 366 314
- US-A1- 2017 000 292

## Beschreibung

Die Erfindung betrifft ein Gargerät mit einem Garraum zum Garen von Gargut nach dem Oberbegriff des Anspruchs 1.

Aus der US°2017°0000°2092°A1 ist ein Backofen bekannt. An einer Außenseite einer Tür ist ein Modul mit einer Kamera angeordnet.

Darüber hinaus ist aus der EP°2°515°044°A1 ein Garsystem bekannt. An einer Außenseite einer Tür des Gargeräts kann ein Tablet-PC angeordnet werden.

US 2015/330640 A1, KR 2014 0039733 A, US 2016/366314 A1, EP 3 136 002 A1 und EP 2 520 169 A1 offenbaren weitere relevant Gargeräte des Standes der Technik jeweils mit einem optischen Sensormodul

Aus dem Dokument DE102007048834A1 ist ein Gargerät mit einer Kamera zum Betrachten des Garguts bekannt. Nachteilig an dieser Lösung ist, dass die Kamera den hohen Temperaturen des Backofens ausgesetzt ist. Demnach ist die Maximaltemperatur des Backofens im Wesentlichen auf die Maximaltemperatur der Kamera begrenzt, was dazu führt, dass vom Benutzer geforderte Betriebsarten, wie z. B. Heißluft bei 300° für Pizza oder pyrolytische Selbstreinigung bei 500° nicht möglich sind.

Aufgabe der Erfindung ist es, den Betrieb von Sensoren im Gargut zu verbessern, insbesondere den Sensor derart sicher im Gargerät anzuordnen, dass er die Benutzeranforderungen an ein Gargerät, wie z.B. pyrolytische Selbstreinigung, sowie die Umfeldanforderungen an Sensoren, wie z.B. Maximaltemperatur, erfüllt und über alle Betriebsarten sicherstellt.

Die Erfindung geht aus von einem Gargerät, insbesondere einem Backofen, mit einem Garraum zum Garen von Gargut und einem optischen Sensormodul zum Erkennen von Eigenschaften des Garguts. Unter einem Gargerät soll insbesondere ein Backofen, ein Mikrowellengerät, oder ein Dampfgarer verstanden werden, welches geeignet ist, Gargut, z. B. Lebensmittel für den Verzehr ausreichend zu garen. Unter einem optischen Sensormodul soll insbesondere ein elektronisches Bauteil verstanden werden, welches mittels Sensoren zum Erkennen von Eigenschaften und Zuständen des Garguts ausgebildet ist.

Erfindungsgemäß ist das Sensormodul reversibel entnehmbar. Unter reversibel entnehmbar soll insbesondere verstanden werden, dass das Sensormodul für den Endkunden derart werkzeuglos entnehmbar ist, dass dieses zerstörungsfrei aus dem Gargerät entnehmbar ist und wieder in die Ausgangssituation einführbar ist. Diese konstruktive Ausgestaltung ermöglicht ein Betreiben des Gargeräts mit eingesetztem Sensormodul im Bereich von Gartemperaturen, die unterhalb kritischer Betriebstemperarturen des Sensormoduls liegen und zugleich einen Betrieb des Gargeräts mit entnommenen Sensormodul bei Garraumtemperaturen, die über den kritischen Temperaturen des Sensormoduls liegen. Somit ist es möglich, die Eigenschaften von Gargut während temperaturunkritischen Temperaturen des Gargeräts zu erkennen und bei höheren Temperaturen, wie z. B. einer pyrolytischen Selbstreinigung des Gargeräts das Sensormodul zu entnehmen.

Vorzugsweise weist das Sensormodul zumindest einen Sensor auf, der vorzugsweise ein optischer Sensor, insbesondere eine Kamera, ein NIR-Sensor und/oder ein Pyrometer ist. Derartige optische Sensoren sind besonders geeignet Eigenschaften und Zustände des Garguts zu erfassen, wobei die Kamera Bilder erfassen, ein NIR-Sensor die Lebensmittelkategorie detektieren oder ein Pyrometer die Temperatur bestimmen kann.

Vorzugsweise ist der Sensor zur Erfassung von Daten, vorzugsweise von Bildinformationen, Temperaturinformationen oder Informationen über die Zusammensetzung des Garguts ausgebildet. Diese, meist digitalen Daten ermöglichen einer Auswertung des Garguts auf dessen Eigenschaft.

Vorzugsweise weist das Sensormodul zumindest eine Elektronikeinheit zur Verarbeitung der Daten des Sensors auf. Unter einer Elektronikeinheit soll vorzugsweise eine Datenverarbeitungseinrichtung verstanden werden, welche die zum Betrieb des Sensors notwendige Software aufweist, und zudem die vom Sensor gewonnenen Daten weiterverarbeiten kann.

Vorzugsweise weist das Sensormodul eine Datenübertragungsvorrichtung zur Übertragung von Daten des Sensors und/oder der Elektronikeinheit auf. Unter einer Datenübertragungsvorrichtung soll insbesondere ein System verstanden werden, welches dazu ausgebildet ist, die gewonnenen Daten des Sensors an ein anderes, vorzugsweise externes System zu übertragen.

Vorzugsweise überträgt die Datenübertragungsvorrichtung Daten an das Gargerät und/oder einen externen Empfänger, insbesondere einen Router oder ein mobiles Endgerät.

Vorzugsweise weist die Datenübertragungsvorrichtung eine kabelgebundene und/oder eine kabellose Übertragung auf. Die gewonnenen Daten des Sensors können somit entweder über ein am Sensormodul angeordnetes Kabel, wie z.B. einem d-Bus, oder über eine kabellose Übertragung, wie z. B. mittels Bluetooth oder WLAN, an einem Empfänger gesandt werden, der die gewonnenen Daten weiter verwertet.

Vorzugsweise weist das Sensormodul eine elektrische Energieversorgung, vorzugsweise einen Energiespeicher, insbesondere einen Akku oder einen Kondensator auf. Um die elektrische Energieversorgung des Sensormoduls sicherzustellen, weist das Sensormodul einen Energiespeicher auf, der den Sensor sowie die weiteren Komponenten mit ausreichender Energie, insbesondere Strom, versorgt.

Vorzugsweise weist das Sensormodul ein Gehäuse auf, in dem zumindest der Sensor, die Datenübertragungsvorrichtung und die Energieversorgung angeordnet sind. Das Gehäuse behaust die Komponenten des Sensormoduls derart, dass diese vor Umwelteinflüssen, wie z.B. Wärme oder Schmutz, ausreichend gut geschützt sind.

Erfindungsgemäß weist das Sensormodul, vorzugsweise das Gehäuse, ein Griffelement oder einen Halteabschnitt auf. Mit Hilfe eines am Gehäuse angebrachten Griffelements oder einem Halteabschnitt soll eine einfache Entnahmemöglichkeit des Sensormoduls aus dem Gargerät sichergestellt werden, wobei diese für den Benutzer komfortabel sowie werkzeuglos erfolgt.

Vorzugsweise weist das Sensormodul zumindest eine Vorrichtung zum Kühlen temperaturkritischer Bauteile des Sensormoduls auf. Unter temperaturkritischen Bauteilen sollen insbesondere Bauteile des Sensormoduls verstanden werden, die bezüglich ihrer maximalen Betriebstemperatur unterhalb der Temperatur des Gargeräts im Garbetrieb liegen. Durch eine derartige Vorrichtung soll sichergestellt werden, dass das Sensormodul ausreichend vor Überhitzung geschützt ist. Eine derartige Vorrichtung kann z.B. aus einem Lüfter gebildet sein, der mittels eines erzeugten Luftstroms das Sensormodul mit ausreichend kühler Luft versorgt und eine sogenannte Stauhitze vermeidet. Alternativ zu einer zusätzlichen Lüftung kann auch auf die Lüftungsvorrichtung des Gargeräts zurückgegriffen werden, welche beispielsweise die Tür des Gargeräts durchlüftet. Vorzugsweise ist das Sensormodul im Wirkbereich einer aktiven Kühlung des Gargeräts angeordnet, wobei die Kühlung explizit für das Sensormodul vorgesehen ist. Alternativ wird eine bereits für das Gargerät vorhandene Kühlung genutzt. Unter einer aktiven Kühlung soll insbesondere eine kälte erzeugende Vorrichtung verstanden werden, welche vorzugsweise mittels Kompressor oder Absorptionstechnologie zur Verringerung der Wärme beiträgt.

Weitere Merkmale der Erfindung ergeben sich aus den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu überlassen. Es sind somit auch Ausführungsbeispiele von der Erfindung als umfasst und offenbart anzusehen, die in den schematischen Figuren nicht explizit gezeigt und erläutert sind, jedoch durch separierte Merkmalskombinationen aus den erläuterten Ausführungen hervorgehen und erzeugbar sind. Dabei zeigt:
- Fig. 1: Eine schematische perspektivische Darstellung eines Gargeräts;
- Fig. 2: eine schematische perspektivische Darstellung eines erfindungsgemäßen Sensormoduls; und
- Fig. 3: eine schematische perspektivische Darstellung des Sensormoduls in bevorzugter Einbaulage.

In den Figuren sind gleiche oder funktionsgleiche Elemente mit den gleichen Bezugszeichen versehen.

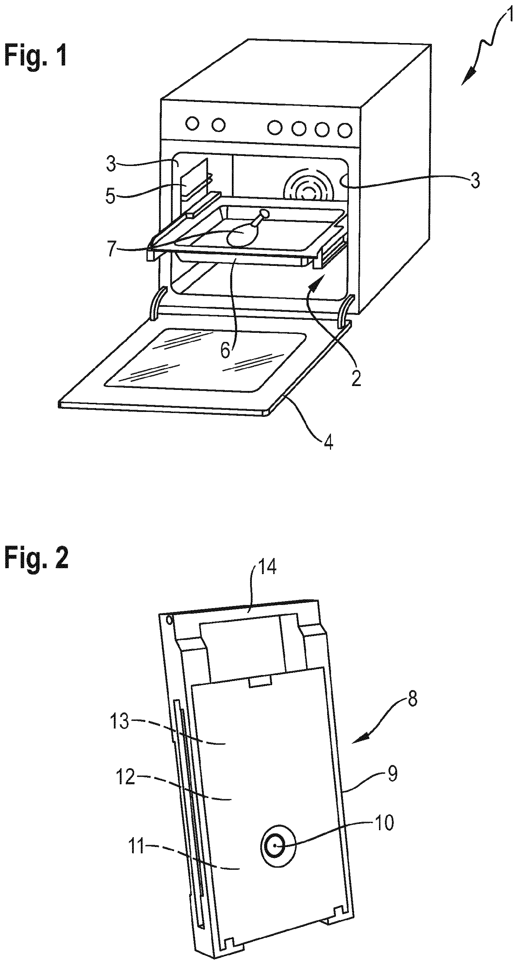

In Fig. 1 ist in einer perspektivischen Darstellung ein Gargerät 1 zum Zubereiten von Lebensmitteln gezeigt, welches im Ausführungsbeispiel ein Backofen ist. Das Gargerät 1 umfasst einen Garraum 2, der durch Seitenwände 3 des Backrohrs begrenzt ist. Frontseitig weist der Garraum 2 eine Beschickungsöffnung auf, die durch eine Tür 4 verschließbar ist. An den Seitenwänden 3 befindet sich je ein Seitengitter 5, das geeignet ist, Gargutträger 6, wie z. B. Roste oder Backbleche aufzunehmen, auf denen das zu garende Gargut 7 aufliegt. Zum Erkennen von Eigenschaften des Garguts 7 ist erfindungsgemäß ein Sensormodul 8 in der Tür 4 vorgesehen. Diese Einbaulage hat sich als besonders gut erwiesen, da sie dem vom Benutzer gewohnten Einblickwinkel in das Gargerät 1 bzw. auf das Gargut 7 am Nächsten kommt. Zudem bildet die innenliegende Glasscheibe der Tür 4 eine gute Barriere bezüglich der Hitze, die dennoch durchsichtig für das Sensormodul 8 ist.

Fig. 2 zeigt in einer perspektivischen Darstellung das Sensormodul 8 in der Ausgestaltung einer Kamera. Das Sensormodul weist ein Gehäuse 9 auf, wobei ein darin angeordneter Sensor 10 im Bereich einer Aussparung des Gehäuses 9 angeordnet ist, um durch diese Aussparung das Gargut betrachten zu können. Im gezeigten Ausführungsbeispiel ist der Sensor 10 als optischer Sensor ausgeführt, um Bildinformationen, insbesondere in Form eines Digitalbildes bzw. eines Videostreams zu erfassen. Die erzeugten Bildinformationen des Sensors 10 werden von einer Elektronikeinheit 11 verarbeitet, welche sich ebenfalls im Gehäuse 9 der Kamera 8 angeordnet ist. Zudem weist das Sensormodul 8 eine Datenübertragungsvorrichtung 12 auf, welche zur Übertragung der Bildinformationen ausgebildet ist. Das Sensormodul 8 weist zudem eine elektrische Energieversorgung 13 auf, welche das Sensormodul 8 und die darin befindlichen Elemente mit Energie versorgt. Das Gehäuse 9 weist ein Griffelement 14 auf, mit dessen Hilfe das Sensormodul 8 aus dem Gargerät 1 entnehmbar ist. Somit kann der Benutzer des Gargeräts 1 das Sensormodul 8, in dessen Einbaulage, werkzeuglos aus dem Gargerät, vorzugsweise der Tür 4 entnehmen.

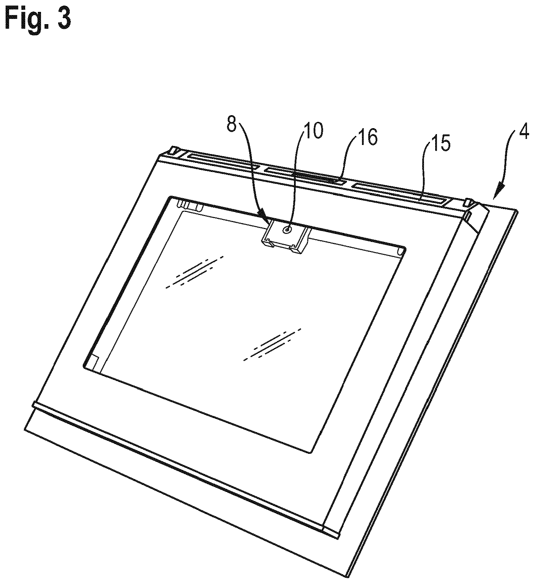

Fig. 3 zeigt das Sensormodul 8 in seiner Einbaulage im Bereich der Tür 4 des Gargeräts 1. Dabei weist die Topblende 15 der Tür 4 eine Aufnahme 16 auf, welche zur sichereren Befestigung des Sensormoduls 8 zwischen den Türscheiben der Tür 4 ausgebildet ist. Die Einbauposition des Sensormoduls 8 in der Tür 4 so gewählt, dass der Sensor 10 einen freien Blick auf das Gargut 7 hat.

### Bezugszeichenliste

- 1: Gargerät, Backofen
- 2: Garraum
- 3: Seitenwand
- 4: Tür
- 5: Seitengitter
- 6: Gargutträger
- 7: Gargut
- 8: Sensormodul, Kamera
- 9: Gehäuse
- 10: Sensor
- 11: Elektronikeinheit
- 12: Datenübertragungsvorrichtung
- 13: Elektrische Energieversorgung
- 14: Griffelement
- 15: Topblende
- 16: Aufnahme

## Patentansprüche

1. Gargerät, insbesondere Backofen, mit einem Garraum (2) zum Garen von Gargut (7) und einem optischen Sensormodul (8) zum Erkennen von Eigenschaften des Garguts (7), wobei das Sensormodul (8) reversibel entnehmbar ist, wobei das Sensormodul (8), vorzugsweise ein Gehäuse (9) des Sensormoduls (8), ein Griffelement (14) aufweist, **dadurch gekennzeichnet, dass** das Sensormodul (8) in der Tür (4) angeordnet ist.

2. Gargerät (1) nach Anspruch 1, **dadurch gekennzeichnet, dass** das Sensormodul (8) zumindest einen Sensor (10) aufweist, der vorzugsweise ein optischer Sensor (10), insbesondere eine Kamera, ein NIR-Sensor und/oder ein Pyrometer ist.

3. Gargerät (1) nach Anspruch 2, **dadurch gekennzeichnet, dass** der Sensor (10) zur Erfassung von Daten, vorzugsweise von Bildinformationen, Temperaturinformationen oder Informationen über die Zusammensetzung des Garguts (7) ausgebildet ist.

4. Gargerät (1), nach einem der vorangegangenen Ansprüche, **dadurch gekennzeichnet, dass** das Sensormodul (8) zumindest eine Elektronikeinheit (11) zur Verarbeitung der Daten des Sensors (10) aufweist.

5. Gargerät (1) nach einem der vorangegangenen Ansprüche, **dadurch gekennzeichnet, dass** das Sensormodul (8) eine Datenübertragungsvorrichtung (12) zur Übertragung der Daten des Sensors (10) und/oder der Elektronikeinheit (11) aufweist.

6. Gargerät (1) nach Anspruch 5, **dadurch gekennzeichnet, dass** die Datenübertragungsvorrichtung (12) die Daten an das Gargerät (1) und/oder einen externen Empfänger, insbesondere einen Router oder ein mobiles Endgerät überträgt.

7. Gargerät (1) nach Anspruch 5 oder 6, **dadurch gekennzeichnet, dass** die Datenübertragungsvorrichtung (12) eine kabelgebundene und/oder eine kabellose Übertragung aufweist.

8. Gargerät (1) nach einem der vorangegangenen Ansprüche, **dadurch gekennzeichnet, dass** das Sensormodul (8) eine elektrische Energieversorgung (13), vorzugsweise ein Energiespeicher, insbesondere einen Akku oder einen Kondensator aufweist.

9. Gargerät (1) nach einem der vorangegangenen Ansprüche, **dadurch gekennzeichnet, dass** das Sensormodul (8) ein Gehäuse (9) aufweist, in dem zumindest der Sensor (10), die Datenübertragungsvorrichtung (12) und die Energieversorgung (13) angeordnet sind.

10. Gargerät (1) nach einem der vorangegangenen Ansprüche, **dadurch gekennzeichnet, dass** das Sensormodul (8) zumindest eine Vorrichtung zum Kühlen temperaturkritischer Bauteile des Sensormoduls (8) aufweist.

11. Gargerät (1) nach einem der vorangegangenen Ansprüche, **dadurch gekennzeichnet, dass** das Sensormodul (8) im Wirkbereich einer Kühlung des Gargeräts 1 angeordnet ist.

## Claims

1. Cooking appliance, in particular an oven, having a cooking chamber (2) for cooking a product to be cooked (7) and an optical sensor module (8) for detecting properties of the product to be cooked (7), wherein the sensor module (8) can be reversibly removed, wherein the sensor module (8), preferably a housing (9) of the sensor module (8), has a grip element (14), **characterised in that** the sensor module (8) is arranged in the door (4).

2. Cooking appliance (1) according to claim 1, **characterised in that** the sensor module (8) has at least one sensor (10) which is preferably an optical sensor (10), in particular a camera, an NIR sensor and/or a pyrometer.

3. Cooking appliance (1) according to claim 2, **characterised in that** the sensor (10) is designed to record data, preferably visual information, temperature information or information about the composition of the product (7).

4. Cooking appliance (1) according to one of the preceding claims, **characterised in that** the sensor module (8) has at least one electronics unit (11) for processing data from the sensor (10).

5. Cooking appliance (1) according to one of the preceding claims, **characterised in that** the sensor module (8) has a data transmission apparatus (12) for transmitting data from the sensor (10) and/or the electronics unit (11).

6. Cooking appliance (1) according to claim 5, **characterised in that** the data transmission apparatus (12) transmits the data to the cooking appliance (1) and/or an external receiver, in particular a router or a mobile terminal.

7. Cooking appliance (1) according to claim 5 or 6, **characterised in that** the data transmission apparatus (12) features wired and/or wireless transmission.

8. Cooking appliance (1) according to one of the preceding claims, **characterised in that** the sensor module (8) has an electrical power supply (13), preferably a power storage system, in particular a rechargeable battery or a capacitor.

9. Cooking appliance (1) according to one of the preceding claims, **characterised in that** the sensor module (8) has a housing (9), in which at least the sensor (10), the data transmission apparatus (12) and the power supply (13) are arranged.

10. Cooking appliance (1) according to one of the preceding claims, **characterised in that** the sensor module (8) has at least one device for cooling temperature-critical components of the sensor module (8).

11. Cooking appliance (1) according to one of the preceding claims, **characterised in that** the sensor module (8) is arranged in the effective range of a cooling system of the cooking appliance 1.

## Revendications

1. Appareil de cuisson, en particulier four, avec un espace de cuisson (2) pour la cuisson de denrées à cuire (7) et un module de détection optique (8) pour la reconnaissance de caractéristiques de la denrée à cuire (7), dans lequel le module de détection (8) est amovible de façon réversible, dans lequel le module de détection (8), de préférence un boîtier (9) du module de détection (8), présente un élément de préhension (14), **caractérisé en ce que** le module de détection (8) est disposé dans la porte (4).

2. Appareil de cuisson (1) selon la revendication 1, **caractérisé en ce que** le module de détection (8) présente au moins un capteur (10), qui est de préférence un capteur optique (10), en particulier une caméra, un capteur NIR et/ou un pyromètre.

3. Appareil de cuisson (1) selon la revendication 2, **caractérisé en ce que** le capteur (10) est formé pour la saisie de données, de préférence d'informations sous forme d'images, d'informations de température ou d'informations sur la composition de la denrée à cuire (7).

4. Appareil de cuisson (1), selon l'une des revendications précédentes, **caractérisé en ce que** le module de détection (8) présente au moins une unité électronique (11) pour le traitement des données du capteur (10).

5. Appareil de cuisson (1) selon l'une des revendications précédentes, **caractérisé en ce que** le module de détection (8) présente un dispositif de transmission de données (12) pour la transmission des données du capteur (10) et/ou de l'unité électronique (11).

6. Appareil de cuisson (1) selon la revendication 5, **caractérisé en ce que** le dispositif de transmission de données (12) transmet les données à l'appareil de cuisson (1) et/ou à un récepteur externe, en particulier un routeur ou un terminal mobile.

7. Appareil de cuisson (1) selon la revendication 5 ou 6, **caractérisé en ce que** le dispositif de transmission de données (12) présente une transmission filaire et/ou sans fil.

8. Appareil de cuisson (1) selon l'une des revendications précédentes, **caractérisé en ce que** le module de détection (8) présente une alimentation en énergie électrique (13), de préférence un accumulateur d'énergie, en particulier une batterie ou un condensateur.

9. Appareil de cuisson (1) selon l'une des revendications précédentes, **caractérisé en ce que** le module de détection (8) présente un boîtier (9) dans lequel au moins le capteur (10), le dispositif de transmission de données (12) et l'alimentation en énergie (13) sont disposés .

10. Appareil de cuisson (1) selon l'une des revendications précédentes, **caractérisé en ce que** le module de détection (8) présente au moins un dispositif pour le refroidissement des composants du module de détection (8) sensibles à la température.

11. Appareil de cuisson (1) selon l'une des revendications précédentes, **caractérisé en ce que** le module de détection (8) est disposé dans la zone d'action d'un refroidissement de l'appareil de cuisson 1.
